# EUROPÄISCHE PATENTSCHRIFT

(11) **EP 2 226 443 B1**
(45) Veröffentlichungstag und Bekanntmachung des Hinweises auf die Patenterteilung: **22.08.2012**
(21) Anmeldenummer: 10001984.3
(22) Anmeldetag: 26.02.2010
(51) Int. Cl.: E04B 1/70, E04B 2/72, E04C 2/38, F16L 5/00, H02G 3/22

(54) **Verfahren zum Durchführen eines klimatischen Bauelementes durch eine Öffnung**
Method for guiding a climatic construction element through an opening
Procédé d'exécution d'un composant climatique à travers une ouverture

(30) Priorität: 03.03.2009 DE 102009011130
(43) Veröffentlichungstag der Anmeldung: 08.09.2010
(73) Patentinhaber: Schako Klima Luft Ferdinand Schad KG, 78600 Kolbingen (DE)
(72) Erfinder: Müller, Rainer, Dr., 78600 Kolbingen (DE)
(74) Vertreter: Arat, Dogan

(56) Entgegenhaltungen:
- WO-A1-00/52278
- WO-A1-02/057676
- DE-U1- 29 619 943
- US-A- 5 456 050

## Beschreibung

Die Erfindung betrifft ein Verfahren zum Durchführen eines klimatischen Bauelements nach dem Oberbegriff des Anspruchs 1 sowie einer Trockenbauwand gemäß dem Oberbegriff des Anspruchs 3.

### STAND DER TECHNIK

Trockenbauwände werden heute im Innenausbau in vielfältiger Form und Ausführung benutzt. Sie werden auch als Ständerwand bezeichnet, was daher rührt, dass zuerst ein Rahmen aus Vertikal- bzw. Horizontalstützen (Ständer) gebildet und dieser Rahmen dann beidseitig von Platten abgedeckt wird. In der Regel handelt es sich dabei um Gipskartonplatten, wobei zwischen die dadurch gebildete Beplankung oft noch Schallschutzelemente eingelegt werden. Diese Trockenbauwände sind in der Regel nur sehr dünn, beispielsweise 10cm bis 15cm stark. Sie bieten deshalb kaum Platz für handelsüblicher lufttechnische Bauelemente, weshalb diese speziell auf die Verwendung in Trockenbauwänden konzipiert sein müssen. Dies ist beispielsweise durch das Klimamodul erfolgt, wie es in der DE 103 02 325 A1 oder auch in der DE 10 2004 019 409 A1 aufgezeigt ist. Daneben wird ausserdem auf die WO 00 /52278 sowie die WO 02/057676 A1 hingewiesen, welche unterschiedliche

Trockenwandkonstruktionen zeigen. Weiter wird aber auch auf die US 5,456,050 und die DE 296 19 943 U1 hingewiesen, welche ebenfalls Rohre zeigen, welche durch Trockenwände verlegt werden.

### AUFGABE

Aufgabe der vorliegenden Erfindung ist es, eine Möglichkeit zu schaffen, handelsübliche klimatechnische Anlagen ohne deren spezielle Konzipierung im Hinblick auf die Trockenbauwand durch eine derartige Trockenbauwand hindurch zu führen.

### LÖSUNG DER AUFGABE

Zur Lösung der Aufgabe führen die Merkmale der Ansprüche 1 und 3.

Der Stützrahmen ist im Grunde ein Hilfselement, das es nun erlaubt, auch handelsübliche lufttechnische Bauelemente, wie insbesondere Rohre oder Luftkästen durch Trockenbauwände hindurch zu führen. Die vorliegende Erfindung soll sich allerdings auf beliebige lufttechnische Elemente beziehen und deren Festlegung in bzw. an Trockenbauwänden ermöglichen.

Der Einfachheit halber wird der Stützrahmen aus C-förmigen Metallprofilen hergestellt, beispielsweise können dies die Profile sein, die sowieso in der Trockenbauwand als Vertikal- bzw. Horizontalstütze verwendet werden. Dabei kann gleichzeitig der Abfall beim Erstellen einer Ständerwand mitbenutzt werden.

Damit eine Verbindung zu dem Stützrahmen hin erfolgen kann, ist das Bauelement von einem Anbaurahmen umfangen, der ein Ausmass in seinen wesentlichen Teilen aufweist, mit dem er den Stützrahmen überdeckt. Er kann dann über beliebige Befestigungselemente an dem Stützrahmen festgelegt werden.

Von der vorliegenden Erfindung wird auch eine Trockenbauwand umfasst, bei der zwischen zwei Seitenplanken ein Stützrahmen integriert ist, welcher das Bauelement umfängt. Dabei ist es für die vorliegende Erfindung auch gleichgültig, wo die Durchführung des klimatechnischen Bauelementes erfolgt. Die Durchführung kann auch im Bereich von Stützen geschehen, wobei in diesem Fall der Stützrahmen als Wechsel dient.

Wie der Anbaurahmen ausgestaltet ist, soll von untergeordneter Bedeutung sein. Hier ist es aber möglich, ästhetischen Anforderungen Folge zu leisten. Das gleiche gilt auch für das Material, aus dem der Anbaurahmen hergestellt wird. Auch dies ist in das Belieben des Bauherrn gestellt. Der Anbaurahmen kann fest mit dem Bauelement verbunden oder dem Bauelement nur aufgeschoben sein. Die Wahl wird durch die bautechnischen Vorgaben bestimmt. Ferner liegt im Rahmen der Erfindung, dass die Trockenbauwand nicht nur von einer Seite mit einem Anbaurahmen beaufschlagt wird, sondern von beiden Seiten her.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 einen teilweise dargestellten Querschnitt durch eine erfindungsgemässe Trockenbauwand ;
Figur 2 eine Frontansicht eines Ausschnitts aus einer erfindungsgemässen Trockenbauwand mit abgenommener Vorderbeplankung ;
Figur 3 die Seitenansicht gemäss Figur 2 mit einem Teil einer Vorderbeplankung und aufgesetztem Anbaurahmen eines lufttechnischen Bauelements.

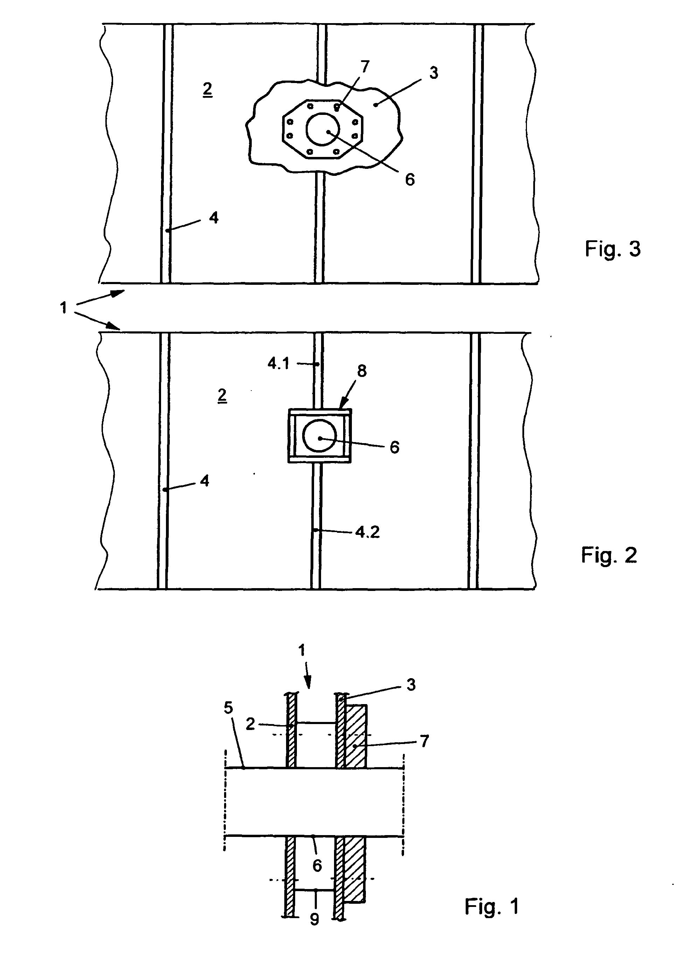

Gemäss den Figuren 1 bis 3 weist eine erfindungsgemässe Trockenbauwand 1 zwei Seitenbeplankungen 2 und 3 auf, welche zwischen sich Vertikalstützen 4 einschliessen. Diese Trockenbauwände werden vor allem als Raumteiler benutzt und besitzen in der Regel noch obere, untere und seitliche Anbauprofile. Diese sind der Übersichtlichkeit halber nicht dargestellt.

Gemäss Figur 1 wird durch eine derartige Trockenbauwand 1 ein lufttechnisches Bauelement, nämlich ein Rohr 5, hindurchgeführt, welches der lufttechnischen Verbindung von beispielsweise zwei Räumen dient. Zu diesem Zweck ist in die Trockenbauwand 1 bzw. die Seitenbeplankung 2 und 3 eine Öffnung 6 eingeformt, welche in etwa einem Durchmesser des Rohres 5 entspricht. Zur Festlegung des Rohres 5 bzw. zur Verblendung der Öffnung 6 wird das Rohr 5 von einem Anbaurahmen 7 umfangen, der im vorliegend gezeigten Ausführungsbeispiel nur einseitig auf der Seitenbeplankung 3 aufliegt. Möglich ist auch eine Zuordnung eines weiteren Anbaurahmens zum Anlegen an die andere Seitenbeplankung 2.

Zum Festlegen des Anbaurahmens 7 und damit auch des Rohrs 5 ist innerhalb der Trockenbauwand 1, wie insbesondere in Figur 2 gezeigt, ein Stützrahmen 8 vorgesehen. Dieser besteht im vorliegenden Ausführungsbeispiel aus vier C-förmigen Profilen 9, die rechteckartig zueinander angeordnet sind. Gemäss Figur 2 dient der Stützrahmen 8 dem Abstützen von zwei Teilen 4.1 und 4.2 einer Vertikalstütze und in diesem Fall als Wechsel zur Durchführung des Rohres 5.

### Die Funktionsweise der vorliegenden Erfindung ist folgende:

Durch eine Trockenbauwand 1 soll ein lufttechnisches Bauelement, nämlich ein Rohr 5 hindurchgeführt werden. Hierzu wird die entsprechende Öffnung 6 in die Seitenbeplankung 2 bzw. 3 eingeformt und danach beispielsweise die Seitenbeplankung 3 wieder abgenommen. Nunmehr wird der Stützrahmen 8 um die Öffnung 6 herumgelegt. Befindet sich die Öffnung 6 im Bereich einer Vertikalstütze 4, wird diese in die zwei Teile 4.1 und 4.2 aufgeteilt, wobei der Stützrahmen 8 als Wechsel dient.

Danach wird wiederum die Seitenbeplankung 3 auf die Vertikalstützen 4 aufgelegt und an diesen befestigt.

Das Rohr 5 wird durch die Öffnung 6 hindurch geschoben, bis der Anbaurahmen 7 an der Seitenbeplankung 3 anschlägt. Der Anbaurahmen 7 kann dabei fest auf dem Rohr 5 angeordnet sein oder aber verschiebbar.

Sobald der Anbaurahmen 7 sich in der gewünschten Position befindet, wird er durch die Seitenbeplankung 3 hindurch mit dem Stützrahmen 8 durch entsprechende Befestigungselemente, die in Figur 1 nur strichpunktiert angedeutet sind, verbunden.

**Bezugszeichenliste**

| | | | | | |
|---|---|---|---|---|---|
| 1 | Trockenbauwand | 34 | | 67 | |
| 2 | Seitenbeplankung | 35 | | 68 | |
| 3 | Seitenbeplankung | 36 | | 69 | |
| 4 | Vertikalstütze | 37 | | 70 | |
| 5 | Rohr | 38 | | 71 | |
| 6 | Öffnung | 39 | | 72 | |
| 7 | Anbaurahmen | 40 | | 73 | |
| 8 | Stützrahmen | 41 | | 74 | |
| 9 | Profil | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | P | Trockenbauwand |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Durchführen eines klimatechnischen Bauelements, insbesondere eines Luftführungsrohres, durch eine Öffnung (6) in einer Seitenbeplankung (2, 3) einer Trockenbauwand, wobei
die Öffnung (6) von einem Stützrahmen (8) im Inneren der Trockenbauwand (1) umfangen wird, **dadurch gekennzeichnet, dass** das Bauelement von einem Anbaurahmen (7) umfangen wird und dieser durch die Seitenbeplankung hindurch mit dem Stützrahmen (8) verbunden wird.

2. Verfahren nach Anspruch 1, **dadurch gekennzeichnet, dass** der Stützrahmen (8) aus C-förmigen Profilen (9) zusammengesetzt wird.

3. Trockenbauwand (1) mit einer Öffnung (6) in einer Seitenbeplankung (2, 3) zur Durchführung eines klimatechnischen Bauelements, insbesondere eines Luftführungsrohres, wobei zwischen den zwei Seitenplanken (2, 3) der trocken bauwand (1) ein Stützrahmen (8) integriert ist, welcher das Bauelement umfängt, **dadurch gekennzeichnet, dass** das Bauelement von einem Anbaurahmen (7) umfangen ist, wobei der Anbaurahmen (7) mit dem Stützrahmen (8) durch die Seitenbeplanteung hindurch verbunden ist.

4. Trockenbauwand nach Anspruch 3, **dadurch gekennzeichnet, dass** der Stützrahmen (8) aus C-förmigen Profilen (9) ausgebildet ist.

5. Trockenbauwand nach Anspruch 4, **dadurch gekennzeichnet, dass** die Profile (9) aus Metall hergestellt sind.

6. Trockenbauwand nach wenigstens einem der Ansprüche 3 oder 4, **dadurch gekennzeichnet, dass** der Stützrahmen (8) als Wechsel eine Vertikal- oder Horizontalstütze (4) zwischen den Seitenplanken (2, 3) unterbricht.

7. Trockenbauwand nach Anspruch 6, **dadurch gekennzeichnet, dass** der Anbaurahmen (7) auf das Bauelement aufgeschoben ist.

## Claims

1. A method for passing an air-conditioning structural element, in particular an air-conducting tube, through an opening (6) in side panelling (2, 3) of a drywall, wherein the opening (6) is surrounded by a supporting frame (8) in the interior of the drywall (1), **characterised in that** the structural element is surrounded by an attachment frame (7) and said frame is connected to the supporting frame (8) through the side panelling.

2. A method according to Claim 1, **characterised in that** the supporting frame (8) is assembled from C-shaped profiles (9).

3. A drywall (1) with an opening (6) in side panelling (2, 3) for passing an air-conditioning structural element through, in particular an air-conducting tube, wherein a supporting frame (8) is integrated between the two side panels (2, 3) of the drywall (1), which frame surrounds the structural element, **characterised in that** the structural element is surrounded by an attachment frame (7), the frame being connected to the supporting frame (8) through the side panelling.

4. A drywall according to Claim 3, **characterised in that** the supporting frame (8) is formed from C-shaped profiles (9).

5. A drywall according to Claim 4, **characterised in that** the profiles (9) are produced from metal.

6. A drywall according to at least one of Claims 3 or 4, **characterised in that** the supporting frame (8) as an alternative interrupts a vertical or horizontal support (4) between the side panels (2, 3).

7. A drywall according to Claim 6, **characterised in that** the attachment frame (7) is pushed on to the structural element.

## Revendications

1. Procédé pour faire traverser un élément de construction technique de climatisation, en particulier une canalisation d'air, à travers une ouverture (6) dans un parement (2, 3) constituant une des faces d'une cloison sèche, dans lequel l'ouverture (6) est entourée d'un cadre support (8), ceci à l'intérieur de la cloison sèche (1), **caractérisé par le fait que** l'élément de construction est entouré d'un cadre rapporté (7) et que ce dernier est assemblé au cadre support (8), ceci à travers le parement et au travers de ce parement.

2. Procédé selon la revendication 1, **caractérisé en ce que** le cadre support (8) résulte de l'assemblage de profilés en C (9).

3. Cloison sèche (1) avec une ouverture (6) dans un parement (2, 3) constituant une de ses faces, pour faire traverser un élément de construction technique de climatisation, en particulier une canalisation d'air, dans lequel un cadre support (8) qui entoure l'élément de construction est intégré entre les deux parements (2, 3) constituant les faces de la cloison sèche (1), **caractérisé par le fait que** l'élément de construction est entouré d'un cadre rapporté (7), le cadre rapporté (7) étant assemblé au cadre support (8), ceci à travers le parement et au travers de ce parement.

4. Cloison sèche selon la revendication 3, **caractérisée en ce que** le cadre support (8) est constitué de profilés en C (9).

5. Cloison sèche selon la revendication 4, **caractérisée en ce que** les profilés (9) sont fabriqués en métal.

6. Cloison sèche selon au moins une des revendications 3 ou 4, **caractérisée en ce que** le cadre support (8), en tant que chevêtre, interrompt un montant vertical ou horizontal (4) entre les parements (2, 3) constituant les faces.

7. Cloison sèche selon la revendication 6, **caractérisée en ce que** le cadre rapporté (7) est glissé sur l'élément de construction.
